(19) Europäisches Patentamt
European Patent Office
Office européen des brevets

(11) **EP 1 524 503 B1**

(12) **EUROPÄISCHE PATENTSCHRIFT**

(45) Veröffentlichungstag und Bekanntmachung des Hinweises auf die Patenterteilung:
**29.07.2009 Patentblatt 2009/31**

(51) Int Cl.:
*G01D 5/36* *(2006.01)* *G01D 5/38* *(2006.01)*

(21) Anmeldenummer: **04023320.7**

(22) Anmeldetag: **30.09.2004**

(54) **Optische Positionsmesseinrichtung**

Optical encoder

Codeur optique

(84) Benannte Vertragsstaaten:
**AT BE BG CH CY CZ DE DK EE ES FI FR GB GR HU IE IT LI LU MC NL PL PT RO SE SI SK TR**

(30) Priorität: **14.10.2003 DE 10347604**

(43) Veröffentlichungstag der Anmeldung:
**20.04.2005 Patentblatt 2005/16**

(73) Patentinhaber: **Dr. Johannes Heidenhain GmbH 83292 Traunreut (DE)**

(72) Erfinder: **Höfer, Volker 83301 Traunreut (DE)**

(56) Entgegenhaltungen:
DE-A1- 2 207 132      DE-A1- 3 616 144
DE-A1- 4 202 680      DE-A1- 4 209 673
DE-C1- 19 508 700      US-A- 5 068 530

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 524 503 B1

**Beschreibung**

Die vorliegende Erfindung betrifft eine optische Positionsmesseinrichtung, die oberwellenfreie Abtastsignale liefert.

In bekannten inkrementalen Positionsmesseinrichtungen auf optischer Basis wird üblicherweise ein Maßstab mit einer periodischen Maßstabteilung mittels einer ebenfalls periodischen Abtastteilung abgetastet. Letztere ist zusammen mit weiteren Komponenten, wie z.B. einer Lichtquelle und einer Detektoranordnung, in einer Abtasteinheit angeordnet, die gegenüber dem Maßstab in mindestens einer Messrichtung beweglich ist. Im Idealfall liegt ein exakt sinusförmiges Abtastsignal vor, das in geeigneten Folgeelektroniken mittels bekannter Interpolationsverfahren weiterverarbeitet - respektive weiter unterteilt - werden kann. Üblicherweise weicht die tatsächlich resultierende Form der detektierten Abtastsignale jedoch mehr oder weniger stark von der idealen Sinusform ab. Hierfür können verschiedenste Ursachen verantwortlich sein, beispielsweise Abweichungen der Teilungsperioden auf der Maßstab- und/oder Abtastseite von den idealen Verhältnissen, Kantenunschärfen schärfen der Teilungsmarkierungen etc.. Die tatsächlich resultierenden Abtastsignale sind daher in der Praxis mit Oberwellen behaftet, die insbesondere die Signalweiterverarbeitung in Form der Interpolation beeinträchtigen können. Es wird daher grundsätzlich angestrebt, den Oberwellengehalt der Abtastsignale möglichst weitgehend zu minimieren.

Aus dem Stand der Technik sind bereits eine Vielzahl von Ansätzen zur Oberwellenfilterung bekannt geworden. Beispielsweise sei im vorliegenden Zusammenhang auf die aus der DE 195 08 700 C1 oder der US 5,068,530 bekannten Maßnahmen zur Oberwellenfilterung verwiesen, In diesen Druckschriften wird vorgeschlagen, zur Eliminierung der besonders störenden dritten und fünften Oberwelle die Teilungsmarkierungen der Abtastteilung auf der Abtastplatte in bestimmten Versatzabständen von den jeweiligen äquidistanten Nominallagen der Teilungsmarkierungen anzuordnen. Die erförderliche Versatzabstände ergibt sich stets aus der jeweils zu eliminierenden Oberwelle.

Sollen basierend auf diesem Filterungsprinzip nunmehr etwa zwei dominierende Oberwellen - z.B. die dritte und fünfte Oberwelle - aus dem Abtastsignal eliminiert werden, so wird in der DE 195 08 700 C1 gemäß Figur 4 vorgeschlagen, auf der Abtastplatte die erforderlichen Versatzabstände sowohl zwischen einzelnen Teilungsmarkierungen als auch zwischen Gruppen von Teilungsmarkierungen vorzusehen. In Messrichtung sind auf der Abtastplatte demzufolge zwei definierte Versatzabstände der Teilungsmarkierungen von den ursprünglichen Nominallagen enthalten.

Für bestimmte Inkrementalabtastungen ist dieses Filterungsprinzip jedoch nicht mehr anwendbar, insbesondere im Fall einer vorgesehenen Vemierabtastung, wie sie z. B. aus der DE 42 09 673 A1 bekannt ist. Hierunter wird ein Abtastprinzip verstanden, bei dem die Maßstabteilung und die Abtastteilung geringfügig unterschiedliche Teilungsperioden besitzen, so dass in einer Detektionsebene nach der Wechselwirkung der von der Lichtquelle emittierten Strahlenbündel mit den beiden Teilungen ein räumlich-periodisches Vemierstreifenmuster mit einer bestimmten Streifenmusterperiode P resultiert. Die Streifenmusterperiode P ist hierbei in der Regel deutlich größer als die Teilungsperioden $TP_M$, $TP_A$ von Maßstab- und Abtastteilung. Würde nunmehr in einer solchen Positionsmesseinrichtung ein Filterprinzip gemäß Figur 4 der erwähnten DE 195 08 700 C1 zur Eliminierung der dritten und fünften Oberwelle eingesetzt, so resultiert dadurch eine Störung der zur Abtastung erforderlichen festen Phasenbeziehungen zwischen Maßstab- und Abtastteilung. Eine Erzeugung eines phasenrichtigen Vernier-Streifenmusters wäre nicht mehr möglich.

Grundsätzlich umgehbar wäre diese Problematik über eine Filtervariante, wie sie in z.B. in Figur 4 der erwähnten US 5,068,530 offenbart ist. Dort ist vorgesehen, die Abtastteilung auf der Abtastplatte senkrecht zur Messrichtung - d.h. in Längsrichtung der Teilungsmarkierungen - in mehrere Teilspuren zu zerlegen. Die erforderlichen Versatzabstände zur Filterung würden bei dieser Variante demzufolge in Längsrichtung der Teilungsmarkierungen vorgesehen und nicht wie oben erwähnt in Messrichtung. Eine Vernierabtastung wäre mit einer derartigen Filterung grundsätzlich möglich. Problematisch hieran ist jedoch die Empfindlichkeit der Abtastung bzw. der Oberwellenfilterung von einer ggf. im Messbetrieb oder bei der Montage resultierenden Verdrehung von Maßstab und Abtasteinheit um eine Achse senkrecht auf den Maßstab. Nachfolgend sei eine derartige Verdrehung auch als Moiré-Verdrehung bezeichnet.

Eine weitere Filtervariante ist ferner aus der DE 42 02 680 A1 bekannt, die auch als sog. arc-sin-Filterung bezeichnet wird. Hierbei werden Teilungsstriche in Richtung der Gitterlinien in mehrere Teilfelder zerlegt. Diese werden senkrecht zum Verlauf der Gitterlinien nach einer arcsin-Funktion versetzt zueinander angeordnet.

Aufgabe der vorliegenden Erfindung ist es, für eine optische Positionsmesseinrichtung basierend auf dem Vernier-Prinzip, eine Möglichkeit zur Oberwellenfilterung anzugeben. Neben der weitgehenden Beseitigung der störendsten Oberwellen aus dem Abtastsignal ist eine möglichst große Unempfindlichkeit der Signalerzeugung incl. Oberwellenfilterung gegenüber Verdrehungen von Maßstab und Abtasteinheit um eine Achse senkrecht auf den Maßstab wünschenswert.

Diese Aufgabe wird gelöst durch eine optische Positionsmesseinrichtung mit den Merkmalen des Anspruches 1.

Vorteilhafte Ausführungsformen der erfindungsgemäßen optischen Positionsmesseinrichtung ergeben sich aus den Maßnahmen, die in den von Anspruch 1 abhängigen Patentansprüchen aufgeführt sind.

Erfindungsgemäß wird in der optischen Positionsmesseinrichtung diejenige Teilung, die zur Oberwellenfilterung herangezogen wird, senkrecht zur Messrichtung in mehr als zwei Teilspuren zerlegt und in den verschiedenen Teilspuren die zur Oberwellenfilterung erforderlichen Versatzabstände vorgesehen. In jeder Teilspur ist demzufolge ein definierter Versatzabstand der jeweiligen Teilungsmarkierungen von den eigentlichen Nominallagen vorgesehen, wobei sich die Versatzabstände benachbarter Teilungsspuren unterscheiden, so dass durch die gewählten Versatzabstände die gewünschte Filterung unerwünschter Oberwellenanteile aus dem Abtastsignal resultiert. Grundsätzlich kann hierbei sowohl die Maßstabteilung als auch die Abtastteilung erfindungsgemäß ausgebildet werden und die entsprechende Filter-Funktionalität übernehmen.

Besonders vorteilhaft erweist sich die erfindungsgemäße Filterungsvariante zur Beseitigung unerwünschter Oberwellenanteile bei einer Vernierabtastung insbesondere im Hinblick auf eventuelle Verdrehungen der Abtasteinheit gegenüber dem Maßstab um eine Achse senkrecht auf den Maßstab. Auch im Fall einer derartigen Dejustage bei der Montage oder aber im Messbetrieb bleibt aufgrund der erfindungsgemäßen Maßnahmen die gewünschte Filterwirkung bestehen.

Vorzugsweise werden Teil-Versatzabstände zur Beseitigung der dritten und fünften Oberwelle bestimmt und zu geeigneten resultierenden Versatzabständen für die jeweiligen Teilspuren kombiniert.

Weitere Vorteile sowie Einzelheiten der vorliegenden Erfindung ergeben sich aus der nachfolgenden Beschreibung von Ausführungsbeispielen der erfindungsgemäßen Positionsmesseinrichtungen anhand der beiliegenden Figuren.

Dabei zeigt

Figur 1     den Abtastrahlengang einer ersten Variante der erfindungsgemäßen optischen Positionsmesseinrichtung;

Figur 2     den Abtastrahlengang einer zweiten Variante der erfindungsgemäßen optischen Positionsmesseinrichtung;

Figur 3     eine erste schematische Darstellung zur Erläuterung erfindungsgemäßer Maßnahmen;

Figur 4     eine Teilansicht einer ersten Ausführungsform der Abtastteilung einer erfindungsgemäßen Positionsmesseinrichtung;

Figur 5     eine Teilansicht einer weiteren Ausführungsform einer Abtastteilung einer erfindungsgemäßen Positionsmesseinrichtung;

Figur 6     eine Gesamtansicht einer Abtastplatte mit einer Abtastteilung basierend auf den Prinzipien, die anhand von Figur 5 erläutert wurde;

Figur 7     eine Teilansicht einer weiteren Ausführungsform einer Abtastteilung einer erfindungsgemäßen Positionsmesseinrichtung in Verbindung mit den zur Abtastung genutzten Detektorelementen.

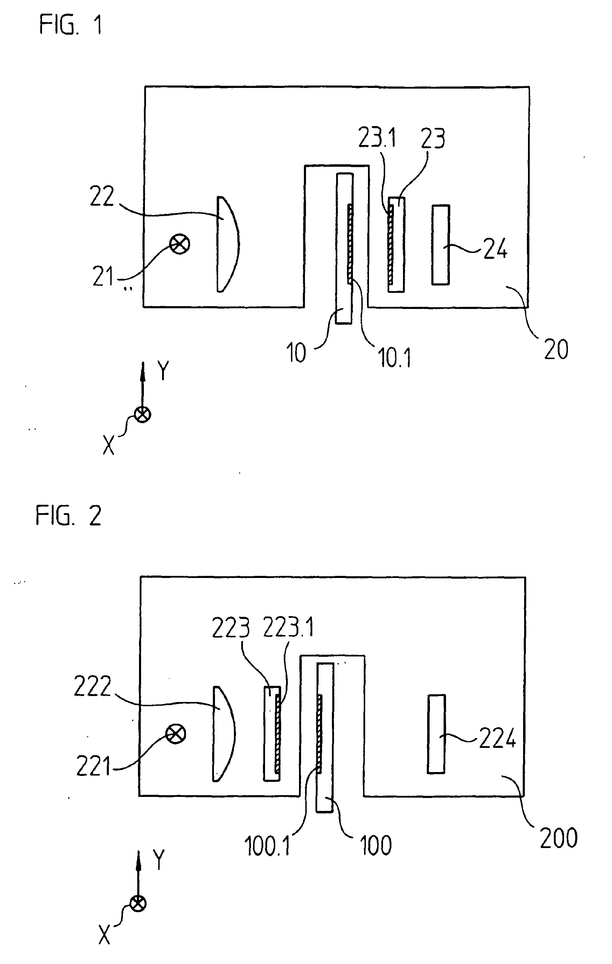

Anhand der schematischen Darstellung in Figur 1 sei der prinzipielle Abtaststrahlengang einer ersten Variante der erfindungsgemäßen optischen Positionsmesseinrichtung erläutert. Diese ist in diesem Beispiel als lineare Positionsmesseinrichtung ausgebildet, die im Durchlicht arbeitet. Im wesentlichen umfasst die Positionsmesseinrichtung einen Maßstab 10 sowie eine gegenüber dem Maßstab 10 in der Messrichtung x bewegliche Abtasteinheit 20. Die Messrichtung x ist im vorliegenden Fall senkrecht zur Zeichenebene orientiert.

Maßstab 10 und Abtasteinheit 20 können etwa an einer numerischen Werkzeugmaschine relativ beweglich in Messrichtung x zueinander angeordnet werden, um die Relativposition zweier zueinander beweglicher Objekte zu erfassen, beispielsweise von Werkzeug und Werkstück. Die aus den resultierenden Abtastsignalen der Positionsmesseinrichtung erzeugbaren Positionsinformationen können dann wiederum in bekannter Art und Weise von einer numerischen Werkzeugmaschinensteuerung zu Steuer- und Regelungszwecken weiterverwertet werden.

Der Maßstab 10 umfasst im dargestellten Beispiel einen transparenten Teilungsträger, z.B. aus Glas, auf dem sich in Messrichtung x erstreckend eine Maßstabteilung 10.1 angeordnet ist. Die Maßstabteilung 10.1 besteht aus einer in Erstreckungsrichtung periodischen Anordnung von Maßstab- Teilungsmarkierungen. Die Maßstab-Teilungsmarkierungen sind als lichtundurchlässige schmale Striche auf dem Teilungsträger ausgebildet, zwischen denen lichtdurchlässige Teilbereiche angeordnet sind. Die Periodizität der Maßstab-Teilungsmarkierungen sei nachfolgend als Maßstab-Teilungsperiode $TP_M$ bezeichnet. In einer möglichen Ausführung der erfindungsgemäßen Positionsmesseinrichtung wird $TP_M = 20\mu m$ gewählt.

Auf Seiten der Abtasteinheit 20 ist eine Lichtquelle 21 vorgesehen, der eine Kollimationsoptik vorgeordnet ist, um die emittierten Strahlenbündel zu kollimieren, bevor diese in Richtung des Maßstabes 10 bzw. der Maßstabteilung 10.1 weiterpropagieren. Nachdem die Maßstabteilung 10.1 von den von der Lichtquelle 21 emittierten Lichtbündeln beaufschlagt wurde, gelangen diese anschließend auf Seiten der Abtasteinheit 10 auf eine Abtastteilung 23.1, die auf einer Abtastplatte 23 angeordnet ist. Die Abtastplatte 23 besteht aus einem transparenten Teilungsträger, auf dem die sich in Messrichtung x erstreckende Abtastteilung 23.1 angeordnet ist. Die Abtastteilung 23.1 umfasst eine periodische Anordnung von Abtast-Teilungsmarkierungen, wobei die Abtast-Teilungsmarkierungen im vorliegenden Beispiel wieder als lichtundurchlässige schmale Striche auf dem Teilungsträger ausgebildet sind, zwischen denen sich lichtdurchlässige Teilbereiche befinden. Die Anordnung der Teilungsmarkierungen auf Seiten der Abtastteilung 23.1 erfolgt mit der nachfolgend als Abtast-Teilungsperiode bezeichneten Größe $TP_A$.

Wie bereits eingangs erwähnt, nutzt die vorliegende Positionsmesseinrichtung das sog. Vernier-Abtastprinzip, was unterschiedliche Maßstab- und Abtast-Teilungsperioden $TP_M$, $TP_A$ erfordert. Im Falle einer Maßstab-Teilungsperiode $TP_M = 20\mu m$ wird daher in einem Ausführungsbeispiel der erfindungsgemäßen Positionsmesseinrichtung die Abtast-Teilungsperiode $TP_A = 20,3846wm$ gewählt.

Bei derart gewählten Maßstab- und Abtast-Teilungsperioden $TP_M$, $TP_A$ resultiert nach der Wechselwirkung der Strahlenbündel mit Maßstab- und Abtastteilung 10.1, 23.1 in einer Detektionsebene ein räumlich-periodisches Vernierstreifenmuster mit der Streifenmusterperiode P = 1,06mm. In der Detektionsebene ist auf Seiten der Abtasteinheit 10 eine Detektoranordnung 24 platziert, die im Fall der Relativbewegung von Maßstab 10 und Abtasteinheit 20 zur Erzeugung mindestens eines periodischen Abtastsignals aus der Abtastung des dann periodisch modulierten Vernier-Streifenmusters dient.

Die Detektoranordnung 24 besteht vorzugsweise aus einer Vielzahl einzelner rechteckförmiger Detektorelemente, die in Messrichtung x mit ihren Rechteck-Längsseiten benachbart zueinander angeordnet sind; derartige Detektoranordnungen werden mitunter auch als strukturierte Fotodetektoren bezeichnet. Es sind jeweils diejenigen Detektorelemente miteinander elektrisch leitend verbunden, die bei der Abtastung der Vernier-Streifenmusters phasengleiche Abtastsignale liefern. Üblicherweise ist eine räumliche Anordnung der Detektorelemente dergestalt vorgesehen, dass innerhalb einer Streifenmusterperiode P stets drei oder vier Detektorelemente angeordnet sind. Auf diese Art und Weise lässt sich insbesondere eine verschmutzungsunempfindliche sog. Einfeldabtastung sicherstellen. Die Wahl der Anzahl von Detektorelementen pro Streifenmusterperiode P hängt davon ab, wie viele phasenverschiedene Abtastsignale ausgewertet werden sollen. Beispielsweise erfordern vier um je 90° phasenversetzte Abtastsignale die Anordnung von vier Detektorelementen innerhalb einer Streifenmusterperiode P, drei um je 120° phasenversetzte Abtastsignale hingegen erfordern die Anordnung von drei Detektorelementen innerhalb einer Streifenmusterperiode P etc..

Bevor anschließend im Detail auf die Maßnahmen zur Oberwellenfilterung in einer derartigen Positionsmesseinrichtung eingegangen wird, sei kurz ein alternativer Abtaststrahlengang erläutert, der ebenfalls in einer erfindungsgemäßen Positionsmesseinrichtung realisierbar ist und schematisch in Figur 2 dargestellt ist. Im wesentlichen unterscheidet sich das Beispiel der Figur 2 von der oben erläuterten Variante in der Anordnung der Abtastplatte 223 bzw. der Abtastteilung 223.1 im Abtaststrahlengang. So ist nunmehr vorgesehen, die Abtastteilung 223.1 der Kollimationsoptik 222 nachzuordnen, so dass die von der Lichtquelle 221 emittierten Strahlenbündel zunächst auf die Abtastteilung 223.1 auftreffen, bevor diese auf die Maßstabteilung 100.1 gelangen und schließlich aus der Wechselwirkung der Lichtbündel mit der Abtast- und Maßstabteilung 223.1, 100.1 in der Detektionsebene das periodische Vernierstreifenmuster resultiert. In der Detektionsebene ist wiederum die Detektoranordnung 224 platziert, die grundsätzlich ebenso aufgebaut ist wie im oben erläuterten Fall.

Ansonsten ist der Aufbau dieses Ausführungsbeispieles der erfindungsgemäßen Positionsmesseinrichtung mit Maßstab 100 und Abtasteinheit 200 identisch zum oben detailliert erläuterten Beispiel der Figur 1.

Des weiteren sei an dieser Stelle erwähnt, dass die nachfolgend erläuterten Maßnahmen nicht nur in Verbindung mit Durchlicht-Systemen wie oben erläutert eingesetzt werden können, sondern selbstverständlich auch im Auflicht betriebene Positionsmesseinrichtungen im Rahmen der vorliegenden Erfindung realisierbar sind. Das Gleiche gilt im übrigen auch für rotatorische Messanordnungen, die ggf. ebenfalls erfindungsgemäß realisierbar sind.

Um bei derartigen Abtaststrahlengängen die gewünschte Oberwellenfilterung zu bewerkstelligen sind entweder auf Seiten der Maßstabteilung oder aber auf Seiten der Abtastteilung bestimmte Maßnahmen erforderlich, die nachfolgend erläutert seien. Hierbei erfolgt die detaillierte Beschreibung der zugrundeliegenden Prinzipien nachfolgend am Beispiel einer Oberwellenfilterung mittels der Abtastteilung. Selbstverständlich können dieses Maßnahmen aber auch auf die Maßstabteilung analog übertragen werden.

Zur Oberwellenfilterung wird in der ersten Variante der vorliegenden Erfindung nunmehr vorgesehen, die zur Filterung verwendeten Teilungsmarkierungen - also entweder die Maßstab- oder Abtastteilungsmarkierungen - entlang ihrer Längsrichtung in mehr als zwei Teilungsmarkierungs-Abschnitte zu zerlegen, so dass senkrecht zur Messrichtung x letztlich mehrere Teilspuren resultieren, die aus den einzelnen Teilungsmarkierungs-Abschnitten gebildet werden. In den jeweiligen Teilspuren der zur Filterung herangezogenen Maßstab- oder Abtastteilung besitzen die jeweiligen Teilungsmarkierungen bzw. Teilungsmarkierungs-Abschnitte einen definierten Versatzabstand $\Delta V_n$ von ihren Nominallagen, die durch die erforderliche Maßstab- oder Abtastteilungsperiode $TP_M$, $TP_A$ vorgegeben sind. Über die Versatzabstände $\Delta V_n$, die sich bei benachbarten Teilspuren unterscheiden, wird die Filterung bzw. Eliminierung der unerwünschten Oberwellenanteile aus dem Abtastsignal bewirkt. Anstelle demzufolge wie bei den Filterungsvarianten gemäß dem eingangs diskutierten Stand der Technik die kompletten Teilungsmarkierungen mit den zur Filterung erforderlichen Versatzabständen $\Delta V_n$ zu versehen, erfolgt die erfindungsgemäße Aufteilung der Teilungsmarkierungen entlang ihrer Längsrichtung in mehr als zwei Teilungsmarkierungs-Abschnitte.

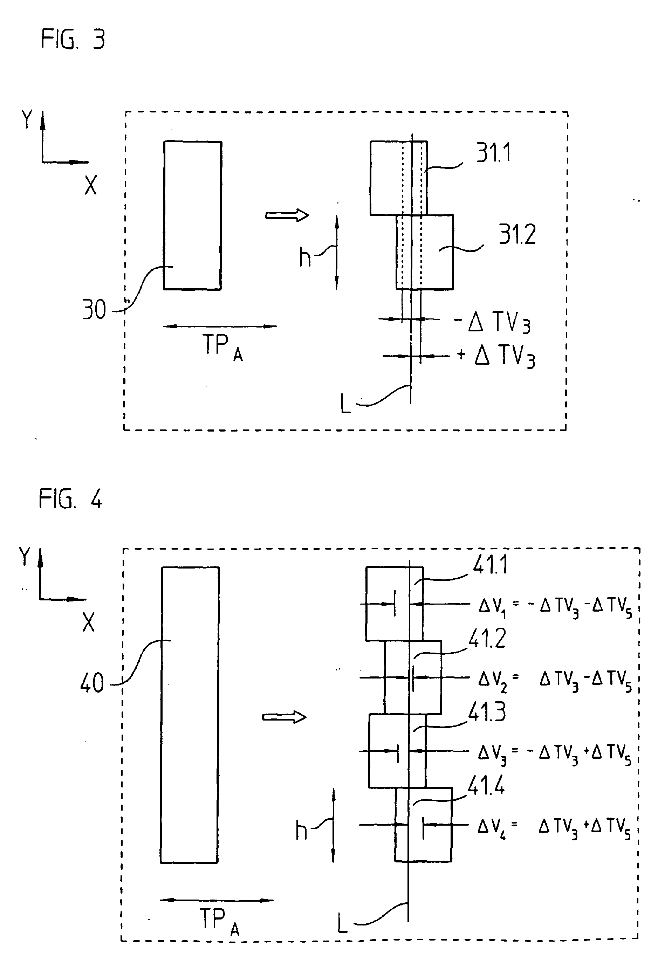

Anhand von Figur 3 sei dieses Prinzip veranschaulicht, wobei aus Gründen der besseren Übersichtlichkeit zunächst nur eine Aufteilung einer einzelnen Teilungsmarkierung 30 einer Abtastteilung entlang ihrer Längsrichtung y in zwei Teilungsmarkierungs-Abschnitte 31.1, 31.2 mit der gleichen Länge bzw. Höhe h vorgesehen ist. In Messrichtung x benachbart sind auf der Abtastplatte eine Vielzahl derartiger Teilungsmarkierungen im Raster der Abtast-Teilungsperiode $TP_A$ angeordnet, d.h. die Teilungsmarkierung 30 besitzt demzufolge die Breite $TP_A/2$. Die Linie L gibt die Nominallage der Mitte der nicht-versetzten Teilungsmarkierung 30 an, die durch die Abtast-Teilungsperiode $TP_A$ vorgegeben ist. Von dieser Nominallage L ist im dargestellten Beispiel der obere Teilungsmarkierungs-Abschnitt 31.1 bzw. dessen Mitte um den Teil-Versatzabstand $-\Delta TV_3$ nach links versetzt angeordnet, der untere Teitung'smarkierungs-Abschnitt 31.2 hingegen um den Teil-Versatzabstand $+\Delta TV_3$ nach rechts versetzt angeordnet. Eine derartige Wahl der Teil-Versatzabstände $+/-\Delta TV_3$ in den beiden aufgeteilten Teilungsmärkierungs-Abschnitten 31.1, 31.2 dient zur Filterung der dritten Oberwelle aus dem Abtastsignal. Analog wären die weiteren Teilungsmarkierungen in der Abtastteilung in je zwei derartige Teilungsmarkierungs-Abschnitte entlang ihrer Längsrichtung y aufzuteilen, so dass pro Teilungsmarkierungs-Abschnitt letztlich eine Teilspur mit den entsprechenden Teil-Versatzabständen $+/\Delta TV_3$ resultiert.

Für eine bestimmte, aus dem Abtastsignal zu eliminierende Oberwelle k können die entsprechenden Teil-Versatzabstände $+/-\Delta TV_k$ angegeben werden, die in den jeweiligen Teilspuren vorzusehen sind. Diese ergeben sich allgemein aus der Beziehung

$$\Delta TV_k = (½ * 1/k * TP_M/2) \qquad (\text{Gl. 1})$$

mit k = 2, 3, 5, 7.

In Gl. (1) geht korrekterweise die Periodizität der Maßstabteilung bzw. die Maßstab-Teilungsperiode $TP_M$ ein, aus der sich letztlich auch die Periodizität des Abtastsignals ableitet. Beim oben erläuterten Vernier-System unterscheidet sich die Abtast-Teilungsperiode $TP_A$ allerdings nur geringfügig von dieser.

In der Praxis erweist es sich als in vielen Fällen hinreichend, die Filterung unerwünschter Oberwellenanteile auf die besonders störende dritte und fünfte Oberwelle zu beschränken (k = 3, 5), insbesondere eine Filterung der 2. Oberwelle (k=2) ist vorzugsweise auf den Fall beschränkt, wenn etwa drei um 120° phasenversetzte Abtastsignale erzeugt werden.

Wie die Filterung der dritten und fünften Oberwelle auf Grundlage der vorliegenden Erfindung erfolgt, sei nachfolgend anhand von Figur 4 erläutert. Diese zeigt die Aufteilung einer einzelnen Teilungsmarkierung 40 auf Seiten der Abtastteilung entlang ihrer Längsrichtung in nunmehr vier resultierende Teilungsmarkierungs-Abschnitte 41.1 - 41.4, welche jeweils die Länge bzw. Höhe h besitzen. Senkrecht zur Messrichtung x benachbart sind auf der entsprechenden Abtastplatte demzufolge vier Teilspuren der Höhe h vorgesehen, in denen die Teilungsmarkierungen bestimmte Versatzabstände $\Delta V_n$ zu ihren Nominallagen aufweisen. Die Nominallagen sind wiederum vorgegeben durch die Linie L, die die Mittenlage der unversetzten, einzelnen Teilungsmarkierungs-Abschnitte 41.1 - 41.4 angibt.

Zur Bestimmung der zur Filterung der dritten und fünften Oberwelle erforderlichen Versatzabstände $\Delta V_n$ in den einzelnen Teilspuren sind mittels Gl. (1) zunächst die jeweiligen Teil-Versatzabstände für k = 3 und k = 5 zu ermitteln. Diese ergeben sich demzufolge gemäß

$$\Delta TV_3 = (½ * 1/3 * TP_M/2) \qquad (\text{Gl. 2.1})$$

$$\Delta TV_5 = (½ * 1/5 * TP_M/2) \qquad (\text{Gl. 2.2})$$

In den vier Teilspuren ist nunmehr vorgesehen, die jeweiligen Teilungsmarkierungen bzw. die Teilungsmarkierungs-Abschnitte 41.1 - 41.4 um die in Figur 4 angegebenen resultierenden Versatzabstände $\Delta V_1 - \Delta V_4$ von ihren Nominallagen versetzt anzuordnen, wobei sich die Nominallagen wiederum aus der vorgegebenen Abtast-Teilungsperiode $TP_A$ ergeben. Die resultierenden Versatzabstände $\Delta V_1 - \Delta V_4$ werden hierbei wie in Figur 4 veranschaulicht aus Linearkombinationen der Teil-Versatzabstände $\Delta TV_3$ und $\Delta TV_5$ abgeleitet. Wiederum sind in benachbarten Teilspuren unterschiedliche resultierende Versatzabstände $\Delta V_1 - \Delta V_4$ der Teilungsmarkierungen bzw. Teilungsmarkierungsabschnitte 41.1 - 41.4 vorgesehen.

Die Höhe h einzelner Teilungsmarkierungsabschnitte bzw. einzelner Teilspuren wird vorzugsweise so gewählt, dass eine möglichst kurzperiodische Filterwirkung erzielbar ist. Dies bedeutet, dass auch im Fall einer eventuellen Moire-Verdrehung der Abtastplatte gegenüber dem Maßstab die Filterwirkung weitgehend erhalten bleibt.

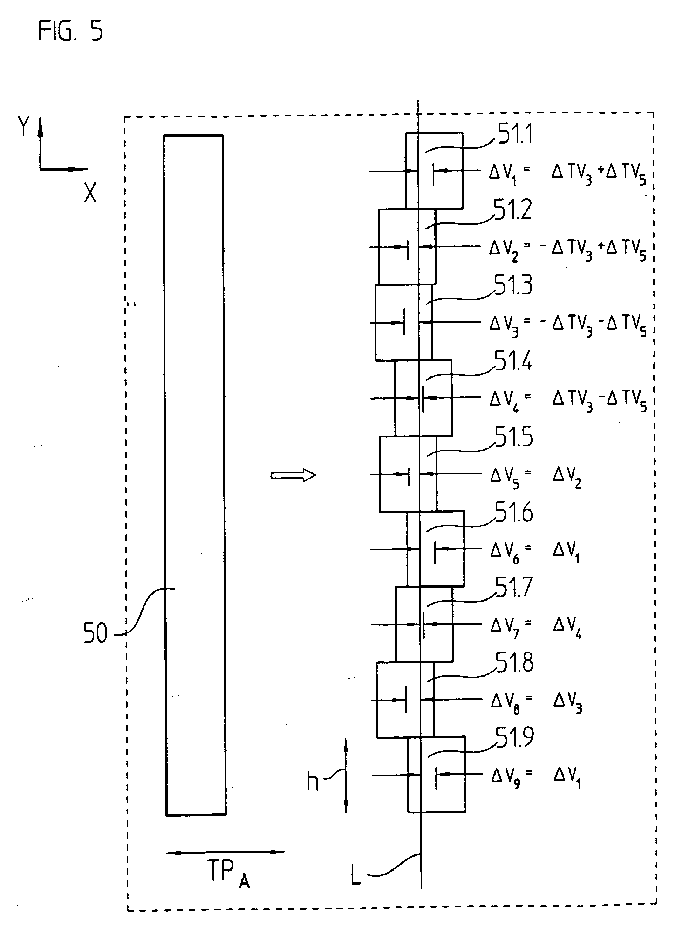

Eine weitere erfindungsgemäße Variante zur Oberwellenfilterung, die auf den Überlegungen des vorherigen Ausführungsbeispiels basiert, sei anhand von Figur 5 erläutert. Dort ist analog zu den beiden letzten Figuren die Aufteilung einer einzigen Teilungsmarkierung 50 in mehrere Teilspuren veranschaulicht, wobei letztlich wieder die dritte und die fünfte Oberwelle aus dem Abtastsignal zu eliminieren sind. Im Unterschied zum vorigen Beispiel ist jetzt eine Aufteilung der Teilungsmarkierung 50 entlang der Längsrichtung in insgesamt neun Teilungsmarkierungs-Abschnitte 51.1 - 51.9 respektive neuen Teilspuren vorgesehen, die jeweils die Höhe h aufweisen. In der y-Richtung benachbart, d.h. senkrecht zur Messrichtung x, sind demzufolge neun Teilspuren der Höhe h angeordnet, die wiederum bestimmte Versatzabstände $\Delta V_n$ zu ihren eigentlichen Nominallagen besitzen, mit n = 1....9 in diesem Beispiel.

Wie im vorherigen Beispiel wurden zunächst die Teil-Versatzabstände für die Filterung der dritten und fünften Oberwelle ermittelt (k = 3, 5). Diese sind identisch zu den beiden oben in den Gleichungen (2.1) und (2.2) angegebenen Größen $\Delta TV_3$ und $\Delta TV_5$. In den neun Teilspuren ist vorgesehen, die jeweiligen Teilungsmarkierungen bzw. die Teilungsmarkierungs-Abschnitte 51.1 - 51.9 um die in Figur 5 angegebenen resultierenden Versatzabstände $\Delta V_1$ - $\Delta V_9$ von ihren Nominallagen bzw. der Linie L versetzt anzuordnen, wobei sich die Nominallagen wiederum aus der vorgegebenen Abtast-Teilungsperiode $TP_A$ ergeben. Die resultierenden Versatzabstände $\Delta V_1$ - $\Delta V_5$ werden wiederum wie in Figur 5 veranschaulicht aus Linearkombinationen der Teil-Versatzabstände $\Delta TV_3$ und $\Delta TV_5$ abgeleitet. In benachbarten Teil-spuren sind unterschiedliche resultierende Versatzabstände $\Delta V_1$ - $\Delta V_9$ der Teilungsmarkierungen bzw. Teilungsmar-kierungsabschnitte 51.1 - 51.9 vorgesehen.

Da es für die beiden zu filternden Oberwellen (k = 3, 5) lediglich vier unterschiedliche resultierende Versatz-abstände $\Delta V_1$ - $\Delta V_4$ gibt, sind die drei Versatzabstände $\Delta V_2$, $\Delta V_3$ und $\Delta V_4$ über die Gesamtlänge zweimal vorgesehen, der Versatzabstand $\Delta V_1$ hingegen dreimal. Dabei ist an den beiden Enden jeweils der gleiche Versatzabstand $\Delta V_1$ für die Teilungsmarkierungsabschnitte 51.1 und 51.9 in den entsprechenden Teilspuren vorgesehen. Senkrecht zur Messrichtung x sind die Teilspuren mit unterschiedlichen Versatzabständen demzufolge mehrfach angeordnet.

Durch die Aufteilung in noch mehr Teilspuren als im vorherigen Beispiel lässt sich eine nochmals verbesserte Filterwirkung bei gleichzeitiger gesteigerter Unempfindlichkeit gegenüber Moire-Verdrehungen erzielen. Gleichzeitig wird durch die Anordnung von identisch versetzten Teilungsmarkierungsabschnitten 51.1 und 51.9 an den beiden Enden eine Unempfindlichkeit bei Verschiebungen von Maßstab und Abtasteinheit in Strichrichtung bewirkt.

Die in Figur 4 dargestellte Ausgestaltung einer Teilungsmarkierung stellt demzufolge die zur Eliminierung der dritten und fünften Oberwelle erforderliche Filter-Basiseinheit dar. Die Variante in Figur 5 repräsentiert eine Fortentwicklung der Filter-Basiseinheit, die letztlich einer Mehrfachanordnung der Basiseinheit in y-Richtung entspricht.

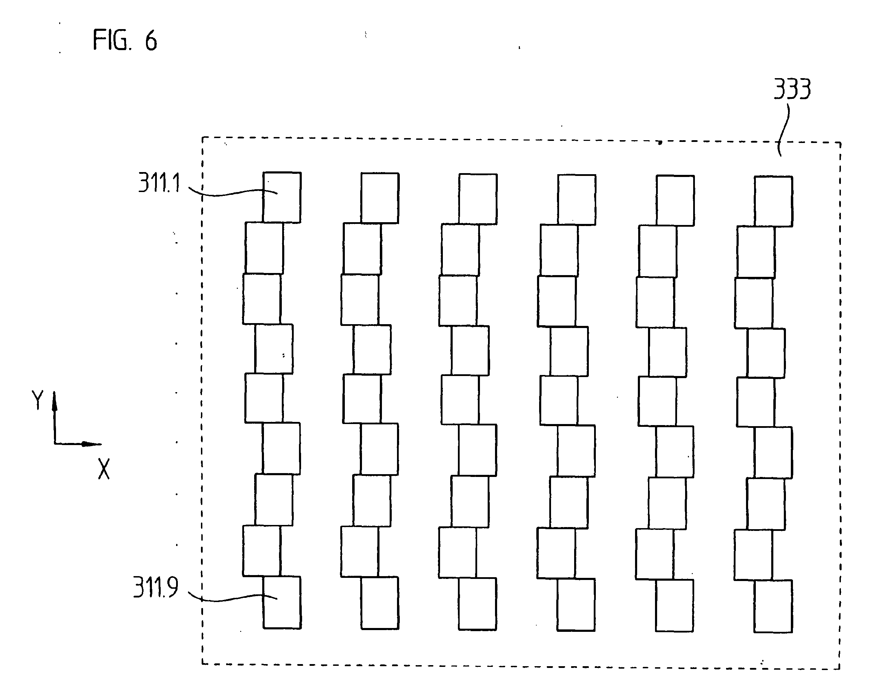

Eine Ansicht einer kompletten Abtastplatte mit einer Abtastteilung basierend auf den anhand von Figur 5 erläuterten Überlegungen zeigt Figur 6 in Draufsicht. Deutlich erkennbar sind hierbei die insgesamt neun resultierenden Teilspuren 311.1 - 311.9, die die vorher diskutierten Versatzabstände zur Filterung der dritten und fünften Oberwelle aufweisen.

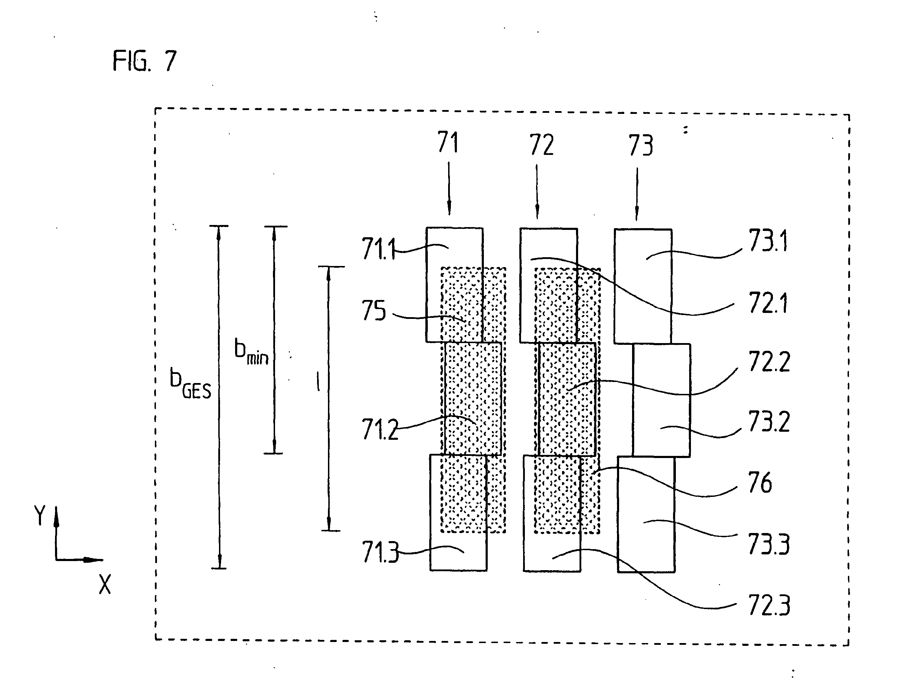

Abschließend sei anhand von Figur 7 eine weitere Variante einer erfindungsgemäßen Positionsmesseinrichtung erläutert, wobei die Figur eine Teilansicht einer zur Oberwellenfilterung genutzten Abtastteilung in Verbindung mit den zur Abtastung verwendeten Detektorelementen zeigt.

Die Abtastteilungsmarkierungen 71, 72, 73 dieses Ausführungsbeispieles umfassen jeweils drei Teilspuren, die wiederum benachbart zueinander in y-Richtung angeordnet sind. Lediglich schematisiert sind die Versatzabstände in den einzelnen Teilspuren zwischen den benachbarten Teilungsmarkierungsabschnitten 71.1 - 71.3, 72.1 - 72.3, 73.1 - 73.3 veranschaulicht. Zur Wahl dieser Versatzabstände können wiederum die Überlegungen herangezogen werden, wie sie in den vorherigen Beispielen erläutert wurden.

Ebenfalls in Figur 7 angedeutet ist überlagert zur Abtastteilung ein Teil der Detektoranordnung in Form zweier einzelner Detektorelemente 75, 76 dargestellt. Über die in der Detektionsebene platzierten, periodisch angeordneten Detektorelemente wird 75, 76 wie erläutert das dort resultierende periodische Streifenmuster abgetastet.

Deutlich erkennbar im Beispiel der Figur 7 ist nunmehr insbesondere, dass die aus den einzelnen Teilspuren resultierende Gesamtbreite $b_{GES}$ der zur Oberwellenfilterung genutzten Abtastteilung größer als die Länge I eines einzelnen Detektorelementes 75, 76 in dessen Längsrichtung gewählt wird. Durch diese Maßnahme ist eine zusätzliche Unempfindlichkeit bzgl. der Relativposition der Detektorelemente gegenüber den - in diesem Beispiel - filternden Abtastteilungsmarkierungen in y-Richtung gewährleistet, was sich beispielsweise in verringertem Justageaufwand bei der Montage auswirkt. Die Länge I eines einzelnen Detektorelementes wird hierbei vorzugsweise dergestalt gewählt, dass dessen Länge I einem ganzzahligen Vielfachen (i = 1, 2, 3...) derjenigen resultierenden Breite $b_{min}$ von Teilspuren entspricht, die mindestens zur Erzielung der gewünschten Filterwirkung nötig ist. Im vorliegenden Beispiel der Figur 7 entspricht die Länge I des Detektorelementes 75, 76 der resultierenden Breite $b_{min}$ zweier Teilspuren (i=1). Mindestens zwei Teilspuren sind demzufolge in diesem Beispiel zur Filterung nötig.

Analog würde dies im Beispiel der oben erläuterten Figur 5 bedeuten, dass das zugehörige Detektorelement eine Länge I besitzt, die der Breite $b_{min}$ von vier Teilspuren entspricht, da in diesem Fall zur Filterung der dritten und fünften Oberwelle mindestens vier Teilspuren mit entsprechenden Versatzabständen nötig sind usw..

Über eine derartige Wahl der Detektorelement-Länge I ist sichergestellt, dass bei der Montage als auch im Messbetrieb eine gewisse Toleranz hinsichtlich der Ausrichtung der entsprechenden Teilungsmarkierung zu den Detektorelementen vorhanden ist, wobei aber gleichzeitig die angestrebte Filterwirkung gewährleistet bleibt.

Selbstverständlich lassen sich mit dieser Variante einer erfindungsgemäß ausgebildeten Positionsmesseinrichtung die Vielzahl der oben erläuterten einzelnen Maßnahmen ebenfalls allesamt kombinieren.

Des weiteren existieren eine Reihe weiterer alternativer Ausführungsformen und Ausgestaltungsmöglichkeiten auf Basis der vorab erläuterten erfindungsgemäßen Prinzipien.

So ist es etwa in Verbindung mit einem Abtaststrahlengang gemäß der Figur 1 möglich, die Detektoranordnung und die Abtastteilung als eine einzige Detektoreinheit auszubilden. Hierbei wäre die Abtastteilung dann unmittelbar auf einem flächigen optoelektronischen Detektorelement angeordnet.

Ferner ist bei einer Filterung auf der Maßstabseite vorteilhaft, die Länge der zugehörigen Abtastteilungsmarkierungen und die Breite der filternden Maßstabteilungsmarkerungen analog zu den Überlegungen aufeinander abzustimmen, die anhand von Figur 7 erläutert wurden. Um demzufolge in diesem Fall eine entsprechende Montagetoleranz zwischen Maßstab und Abtasteinheit zu erzielen, müsste die Länge einer Teilungsmarkierung auf der Abtastplatte analog zu den Überlegungen in Verbindung mit den Detektorelementen gewählt werden; also zum einen kleiner als die Gesamtbreite der zur Filterung genutzten Teilspuren und zum anderen mindestens so groß, dass diese Länge der Breite von Teilspuren oder einem ganzzahligen Vielfachen (i = 1, 2, 3, ....) hiervon entspricht, die mindestens zur Filterung nötig sind.

Ferner sei erwähnt, dass sich sowohl lineare als auch rotatorische Positionsmesseinrichtung erfindungsgemäß ausbilden lassen. Im letztgenannten Fall könnte dann auch eine Geometrie von Detektorelementen zum Einsatz kommen, die von der oben diskutierten Rechteckform abweicht.

Ebenso gibt es verschiedene Ausführungsmöglichkeiten bzgl. der verwendeten Teilungsstrukturen. So können diese sowohl als Amplituden- wie auch als Phasengitter ausgebildet sein.

Darüber hinaus gibt es im Rahmen der vorliegenden Erfindung weitere Ausgestaltungsmöglichkeiten entsprechender Positionsmesseinrichtungen.

**Patentansprüche**

1.  Optische Positionsmesseinrichtung, bestehend aus

    - einem Maßstab mit einer Maßstabteilung mit Maßstab-Teilungsmarkierungen, die mit einer Maßstab-Teilungsperiode ($TP_M$) in einer Messrichtung (x) periodisch angeordnet sind,
    - einer gegenüber dem Maßstab in mindestens einer Messrichtung (x) beweglichen Abtasteinheit mit
    - einer Lichtquelle,
    - mindestens einer periodischen Abtastteilung bestehend aus Abtast-Teilungsmarkierungen, die mit einer Abtast-Teilungsperiode $TP_A$ entlang der Messrichtung (x) periodisch angeordnet sind, wobei sich die Maßstab-Teilungsperiode $TP_M$ und die Abtast-Teilungsperiode $TP_A$ voneinander unterscheiden und
    - einer Detektoranordnung, mittels der im Fall der Relativbewegung von Maßstab und Abtasteinheit mindestens ein periodisches Abtastsignal erfassbar ist, das aus der Abtastung eines periodischen Vernierstreifenmusters mit der Streifenmusterperiode P in einer Detektionsebene der Detektoranordnung resultiert,

    **dadurch gekennzeichnet, dass**
    die Maßstabteilung (10.1) oder die Abtastteilung (23.1) jeweils mehr als zwei senkrecht zur Messrichtung (x) benachbarte Teilspuren (311.1, ....311.9) umfasst und die Teilungsmarkierungen in jeder Teilspur (311.1, ... 311.9) jeweils einen definierten und konstanten Versatzabstand ($\Delta V_n$) von ihren Nominallagen besitzen, wobei sich die Versatzabstände ($\Delta V_n$) benachbarter Teilspuren (311.1, ....311.9) unterscheiden, so dass durch die gewählten Versatzabstände ($\Delta V_n$) eine Filterung unerwünschter Oberwellenanteile aus dem Abtastsignal resultiert und der Teil-Versatzabstand $\Delta TV_k$ zur Filterung der k-ten Oberwelle gemäß

    $$\Delta TV_k = +/- \ (½ * 1/k * TP_M/2)$$

    gewählt ist, mit k = 2, 3, 5, 7.

2.  Optische Positionsmesseinrichtung nach Anspruch 1, **dadurch gekennzeichnet, dass** die Anordnung der einzelnen Elemente der Abtasteinheit (20) dergestalt ist, dass die von der Lichtquelle (21) emittierten Strahlenbündel zunächst auf die Maßstabteilung (10.1) auftreffen, dann auf die Abtastteilung (23.1) gelangen, so dass nach Wechselwirkung der Lichtbündel mit der Abtastteilung (23.1) das periodische Vernierstreifenmuster in der Detektionsebene resultiert.

3. Optische Positionsmesseinrichtung nach Anspruch 1, **dadurch gekennzeichnet, dass** die Anordnung der einzelnen Elemente der Abtasteinheit (200) dergestalt ist, dass die von der Lichtquelle (221) emittierten Strahlenbündel zunächst auf die Abtastteilung (223.1) auftreffen, dann auf die Maßstabteilung (100.1) gelangen, so dass nach Wechselwirkung der Lichtbündel mit der Maßstabteilung (100.1) das periodische Vernierstreifenmuster in der Detektionsebene resultiert.

4. Optische Positionsmesseinrichtung nach Anspruch 2 oder 3, **dadurch gekennzeichnet, dass** die Detektoranordnung (24; 224) aus einer Vielzahl von rechteckförmigen Detektorelementen (75, 76) besteht, die in Messrichtung (x) benachbart zueinander angeordnet sind, wobei jeweils diejenigen Detektorelemente (75, 76) miteinander elektrisch verbunden sind, die phasengleiche Abtastsignale liefern.

5. Optische Positionsmesseinrichtung nach Anspruch 4, **dadurch gekennzeichnet, dass** entlang der Messrichtung (x) stets drei oder vier Detektorelemente (75, 76) innerhalb einer Streifenmusterperiode des abgetasteten Vernierstreifenmusters angeordnet sind.

6. Optische Positionsmesseinrichtung nach mindestens einem der vorhergehenden Ansprüche, **dadurch gekennzeichnet, dass** in den Teilspuren jeweils resultierende Versatzabstände ($\Delta V_n$) vorgesehen sind, die aus der Linearkombination mindestens zweier Teil-Versatzabstände ($\Delta TV_k$) resultieren.

7. Optische Positionsmesseinrichtung nach Anspruch 1, **dadurch gekennzeichnet, dass** die Teilspuren mit unterschiedlichen Versatzabständen ($\Delta V_n$) senkrecht zur Messrichtung (x) mehrfach angeordnet sind.

8. Optische Positionsmesseinrichtung nach Anspruch 4, **dadurch gekennzeichnet, dass** die sich aus den Teilspuren ergebende Gesamtbreite ($b_{GES}$) der zur Oberwellenfilterung genutzten Abtastteilung senkrecht zur Messrichtung (x) größer als die Länge (I) der Detektorelemente senkrecht zur Messrichtung (x) gewählt ist.

9. Optische Positionsmesseinrichtung nach Anspruch 8, **dadurch gekennzeichnet, dass** die Länge (I) eines Detektorelementes derjenigen resultierenden Breite ($b_{min}$) von Teilspuren oder einem ganzzahligen Vielfachen (i = 1, 2,....) hiervon entspricht, die mindestens zur Erzielung der gewünschten Filterwirkung nötig sind.

10. Optische Positionsmesseinrichtung nach Anspruch 1, **dadurch gekennzeichnet, dass** die Maßstabteilung mehrere Teilspuren umfasst, die zur Oberwellenfilterung geeignete Versatzabstände der Teilungsmarkierungen aufweisen und wobei die Länge einer Abtast-Teilungsmarkierung kleiner als die Gesamtbreite der zur Filterung genutzten Teilspuren auf dem Maßstab ist.

11. Optische Positionsmesseinrichtung nach Anspruch 10, **dadurch gekennzeichnet, dass** in der Maßstabteilung die Länge einer Abtast-Teilungsmarkierung der Breite von Teilspuren entspricht, die mindestens zur Erzielung der gewünschten Filterwirkung nötig sind oder einem ganzzahligen Vielfachen (i = 1, 2, 3,.....) hiervon.

12. Optische Positionsmesseinrichtung nach Anspruch 2, **dadurch gekennzeichnet, dass** die Detektoranordnung und die Abtastteilung in Form einer einzigen Detektoreinheit ausgebildet sind, bei der die Abtastteilung unmittelbar auf einem flächigen optoelektronischen Detektorelement angeordnet ist.

## Claims

1. An optical position-measuring device, consisting of:

   - a scale with a scale graduation with scale graduation markings, which are periodically arranged with a scale graduation period ($TP_M$) in a measurement direction (x),
   - a scanning unit that can move relative to the scale in at least one measurement direction (x) with
   - a light source,
   - at least one periodic scanning graduation consisting of scanning graduation markings, which are periodically arranged with a scanning graduation period $TP_A$ along the measurement direction (x), wherein the scale graduation period $TP_M$ and the scanning graduation period $TP_A$ differ from one another, and
- a detector arrangement, by means of which in the event of relative movement of scale and scanning unit at least one periodic scanning signal can be registered, which results from the scanning of a periodic vernier strip pattern with the strip pattern period P in a detection plane of the detector arrangement,

**characterised in that** the scale graduation (10.1) or the scanning graduation. (23.1) in each case comprises more than two adjacent track components (311.1, ....311.9) at right-angles to the measurement direction (x), and **in that** the graduation markings in each partial track (311.1, ... 311.9) in each case possess a defined and constant offset distance ($\Delta V_n$) from their nominal locations, wherein

the offset distances ($\Delta V_n$) of adjacent track components (311.1, ....311.9) differ, so that by means of the selected offset distances ($\Delta V_n$) a filtering of undesired harmonic components from the scanning signal results, and the offset distance component $\Delta TV_k$ for purposes of filtering the kth harmonic is selected in accordance with:

$$\Delta TV_k = +/- (1/2 * 1/k * TP_M/2)$$

where k = 2, 3, 5, 7

2. The optical position-measuring device according to Claim 1,
   **characterised in that** the arrangement of the individual elements of the scanning unit (20) is such that the ray bundles emitted from the light source (21) firstly impinge onto the scale graduation (10.1), then arrive at the scanning graduation (23.1), so that after interaction of the ray bundles with the scanning graduation (23.1) the periodic vernier strip pattern results in the detection plane.

3. The optical position-measuring device according to Claim 1,
   **characterised in that** the arrangement of the individual elements of the scanning unit (200) is in such a manner that the ray bundles emitted from the light source (221) firstly impinge onto the scanning graduation (223.1), then arrive at the scale graduation (100.1), so that after interaction of the ray bundles with the scale graduation (100.1) the periodic vernier strip pattern results in the detection plane.

4. The optical position-measurement device according to Claim 2 or 3,
   **characterised in that** the detector arrangement (24, 224) consists of a large number of rectangular-shaped detector elements (75, 76), which are arranged adjacent to one another in the measurement direction (x), wherein each of these detector elements (75, 76) is electrically connected to one another, delivering in-phase scanning signals.

5. The optical position-measuring device according to Claim 4,
   **characterised in that** along the measurement direction (x) always three or four detector elements (75, 76) are arranged within a strip pattern period of the scanned vernier strip pattern.

6. The optical position-measuring device according to at least one of the preceding claims,
   **characterised in that** in each case resultant offset distances ($\Delta V_n$) are provided in the track components, which result from the linear combination of at least two offset distance components ($\Delta TV_k$).

7. The optical position-measuring device according to Claim 1,
   **characterised in that** the track components are multiply arranged with differing offset distances ($\Delta V_n$) at right angles to the measurement direction (x).

8. The optical position-measuring device according to Claim 4,
   **characterised in that** the total width ($b_{GES}$) of the scanning graduation, used for purposes of harmonic filtering, ensuing from the track components is selected to be larger at right angles to the measurement direction (x) than the length (1) of the detector elements at right-angles to the measurement direction (x).

9. The optical position-measuring device according to claim 8, **characterised in that** the length (1) of a detector element corresponds to that resultant width ($b_{min}$) of track components, or a whole number multiple (i = 1, 2,....) thereof, which at least are necessary for the achievement of the desired filter effect.

10. The optical position-measuring device according to Claim 1,
**characterised in that** the scale graduation comprises a plurality of track components, which for purposes of harmonic filtering have suitable offset distances of the graduation markings, and wherein
the length of a scanning graduation marking is smaller than the total width of the track components used for purposes of filtering on the scale.

11. The optical position-measuring device according to Claim 10,
**characterised in that** in the scale graduation the length of a scanning graduation marking corresponds to the width of track components, which at least are necessary for purposes of the achievement of the desired filter effect, or a whole number multiple (i = 1, 2, 3,) thereof.

12. The optical position-measuring device according to Claim 2,
**characterised in that** the detector arrangement and the scanning graduation are designed in the form of a single detector unit, in which the scanning graduation is arranged directly on a planar optoelectronic detector element.

**Revendications**

1. Dispositif de mesure de position optique, constitué de :

- une règle comportant une graduation de règle avec des marquages de graduation de règle, qui sont disposés périodiquement avec une période de graduation de règle (TPM) dans une direction de mesure (x),
- une unité de balayage déplaçable par rapport à la règle dans au moins une direction de mesure (x) comportant
- une source de lumière,
- au moins une graduation de balayage périodique constituée de marquages de graduation de balayage, qui sont disposés périodiquement avec une période de graduation de balayage $TP_A$ le long de la direction de mesure (x), moyennant quoi le période de graduation de règle $TP_M$ et la période de graduation de balayage $TP_A$ sont différentes l'une de l'autre et
- un dispositif de détecteur, au moyen duquel en cas de mouvement relatif de la règle et de l'unité de balayage, au moins un signal de balayage périodique peut être détecté, lequel résulte du balayage d'un modèle de rayure de vernier avec la période de modèle de rayure P dans un plan de détection du dispositif de détecteur,

**caractérisé en ce que**
la graduation de règle (10.1) ou la graduation de balayage (23.1) comprend respectivement plus de deux pistes partielles (311.1, ...311.9) voisines perpendiculairement à la direction de mesure (x) et les marquages partiels dans chaque piste partielle (311.1, ...311.9) possèdent respectivement un écart de déport ($\Delta V_n$) constant et défini par rapport à leurs positions nominales, moyennant quoi les écarts de déport ($\Delta V_n$) des pistes partielles (311.1, ...311.9) sont différents, de telle sorte que du fait des écarts de déport ($\Delta V_n$) choisis, un filtrage des fractions d'harmoniques non souhaitées hors du signal de balayage en résulte et l'écart de déport partiel $\Delta TV_k$ pour filtrer la k-ème harmonique selon

$$\Delta TV_k = +/- \ (\frac{1}{2} \cdot 1/k \cdot TP_M/2)$$

soit choisi, avec k = 2, 3, 5, 7....

2. Dispositif de mesure de position optique selon la revendication 1, **caractérisé en ce que** la disposition des éléments individuels de l'unité de balayage (20) est telle que le faisceau de rayonnement émis par la source de lumière (21) bute d'abord sur la graduation de règle (10.1), puis parvienne sur la graduation de balayage (23.1), de telle sorte que selon l'interaction du faisceau de lumière avec la graduation de balayage (23.1), le modèle de rayure de vernier périodique en résulte dans le plan de détection.

3. Dispositif de mesure de position optique selon la revendication 1, **caractérisé en ce que** la disposition des éléments individuels de l'unité de balayage (200) est telle que le faisceau de rayonnement émis par la source de lumière (221) bute d'abord sur la graduation de balayage (223.1), puis parvienne sur la graduation de règle (100.1), de telle sorte que selon l'interaction du faisceau de lumière avec la graduation de balayage (100.1), le modèle de rayure de vernier périodique en résulte dans le plan de détection.

**4.** Dispositif de mesure de position optique selon la revendication 2 ou 3, **caractérisé en ce que** le dispositif de détecteur (24 ;224) est constitué d'une pluralité d'éléments de détecteur (75,76) rectangulaires, qui sont disposés en voisinage les uns des autres dans la direction de mesure (x), moyennant quoi les éléments de détecteur (75,76), qui délivrent des signaux de balayage de même phase, sont respectivement reliés électriquement les uns aux autres.

**5.** Dispositif de mesure de position optique selon la revendication 4, **caractérisé en ce que** le long de la direction de mesure (x), deux ou quatre éléments de détecteur (75,76) sont constamment disposés à l'intérieur d'une période de modèle de rayure du modèle de rayure de vernier balayé.

**6.** Dispositif de mesure de position optique selon au moins une des revendications précédentes, caractérsié en ce que dans les pistes partielles, des écarts de déport ($\Delta V_n$) de résultat respectifs sont prévus, lesquels résultent de la combinaison linéaire d'au moins deux écarts de déports partiels ($\Delta TV_k$).

**7.** Dispositif de mesure de position optique selon la revendication 1, **caractérisé en ce que** les pistes partielles sont disposées en pluralité avec des écarts de déports ($\Delta V_n$) différents perpendiculairement à la direction de mesure (x).

**8.** Dispositif de mesure de position optique selon la revendication 4, **caractérisé en ce que** la largeur totale ($b_{GES}$) résultant des pistes partielles de la graduation de balayage utilisée pour le filtrage d'harmoniques est choisie de manière à être plus grande perpendiculairement à la direction de mesure (x) que la longueur (1) des éléments de détecteur perpendiculairement à la direction de mesure (x).

**9.** Dispositif de mesure de position optique selon la revendication 8, **caractérisé en ce que** la longueur (1) d'un élément de détecteur correspond à la largeur de résultat ($b_{min}$) des pistes partielles ou d'un multiple entier (i = 1,2,0...) de celle-ci, qui sont au moins utiles pour obtenir l'effet de filtrage souhaité.

**10.** Dispositif de mesure de position optique selon la revendication 1, **caractérisé en ce que** la graduation de règle comprend plusieurs pistes partielles, qui présentent des écarts de déport des marquages de graduation appropriés au filtrage d'harmoniques et moyennant quoi la longueur d'un marquage de graduation de balayage est plus petite que la largeur totale des pistes partielles sur la règle utilisées pour le filtrage.

**11.** Dispositif de mesure de position optique selon la revendication 10, **caractérisé en ce que** dans la graduation de règle, la longueur d'un marquage de graduation de balayage correspond à la largeur des pistes partielles, qui sont utiles au moins pour obtenir l'effet de filtrage souhaité, ou à un multiple entier (i = 1,2,0...) de celle-ci.

**12.** Dispositif de mesure de position optique selon la revendication 2, **caractérisé en ce que** le dispositif de détecteur et la graduation de balayage sont configurés sous la forme d'une unité de détecteur unique, dans laquelle la graduation de balayage est disposée directement sur un élément de détecteur optoélectronique plat.

FIG. 1

FIG. 2

FIG. 3

FIG. 4

## FIG. 5

$\Delta V_1 = \Delta TV_3 + \Delta TV_5$ — 51.1

$\Delta V_2 = -\Delta TV_3 + \Delta TV_5$ — 51.2

$\Delta V_3 = -\Delta TV_3 - \Delta TV_5$ — 51.3

$\Delta V_4 = \Delta TV_3 - \Delta TV_5$ — 51.4

$\Delta V_5 = \Delta V_2$ — 51.5

$\Delta V_6 = \Delta V_1$ — 51.6

$\Delta V_7 = \Delta V_4$ — 51.7

$\Delta V_8 = \Delta V_3$ — 51.8

$\Delta V_9 = \Delta V_1$ — 51.9

$TP_A$

FIG. 6

333

311.1

311.9

Y

X

EP 1 524 503 B1

EP 1 524 503 B1

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19508700 C1
- US 5068530 A
- DE 4209673 A1
- DE 4202680 A1